(19) **Europäisches Patentamt European Patent Office Office européen des brevets**

(11) **EP 4 787 224 A1**

(12) **EUROPEAN PATENT APPLICATION**

(43) Date of publication:
05.08.2026 Bulletin 2026/32

(21) Application number: 25154770.9

(22) Date of filing: 29.01.2025

(51) International Patent Classification (IPC):
*G06K 7/10* (2006.01)    *G06K 19/07* (2006.01)

(52) Cooperative Patent Classification (CPC):
**G06K 7/10297; G06K 19/0723;** G06K 19/0726

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **Fina, Thomas**
**5656 AG Eindhoven (NL)**

• **Brandl, Roland**
**5656 AG Eindhoven (NL)**
• **Goncalves Parreira Pires, Fabricio**
**5656 AG Eindhoven (NL)**

(74) Representative: **Krott, Michel**
**NXP B.V.**
**Intellectual Property & Licensing**
**High Tech Campus 60**
**5656 AG Eindhoven (NL)**

Remarks:
Amended claims in accordance with Rule 137(2) EPC.

(54) **METHOD FOR DETERMINING A RFID BACKSCATTER LINK FREQUENCY AND RFID TAG**

(57) There is disclosed a method for determining a backscatter link frequency, BLF, value in a radio frequency identification, RFID, tag device, by continuously evaluating incoming waveforms. Upon detecting the start of a TRCAL symbol a first and a second clock driven counters are initialized. The first counter is associated with a first divide ratio and the second counter is associated with a second divide ratio. The counters are incremented every clock cycle until the end of the TRCAL symbol is detected. At the end of the query command the divide ratio is determined, and the corresponding counter is selected. The counter value is stored as BLF indicator and indicates the BLF. Also disclosed is an RFID tag.

Fig. 2

EP 4 787 224 A1

## Description

TECHNICAL FIELD

The present disclosure relates to an RFID tag and a method for determining a backscatter link frequency, BLF, value in a radio frequency identification, RFID, tag device, by continuously evaluating incoming waveforms. Upon detecting the start of a TRCAL symbol a first and a second clock driven counters are initialized. The first counter is associated with a first divide ratio and the second counter is associated with a second divide ratio. The counters are incremented every clock cycle until the end of the TRCAL symbol is detected. At the end of the query command the divide ratio is determined, and the corresponding counter is selected. The counter value is stored as BLF indicator and indicates the BLF.

The disclosure may hence relate to the technical field of radio frequency identification tags.

TECHNICAL BACKGROUND

The radio-frequency identity protocol defines the physical and logical requirements for a passive-backscatter, interrogator-talks-first (ITF), radio-frequency identification (RFID) system operating in the 860 MHz - 960 MHz frequency range. The system comprises Interrogators, also known as readers, and tags, also known as labels or transponders. An interrogator transmits information to a tag by modulating an RF signal in the 860 MHz - 960 MHz frequency range. The tag receives both information and operating energy from this RF signal. Tags are passive, meaning that they receive all of their operating energy from the interrogator's RF signal. An interrogator sends information to a tag by transmitting a continuous-wave (CW) RF signal to the tag; the tag responds by modulating the reflection coefficient of its antenna, thereby backscattering an information signal to the interrogator.

According to the protocol the backscatter link frequency is required to comply with equation (1).

$$(1) \qquad BLF\ [Hz] = (DR\ [1])\ /\ (TRCAL\ [s]),$$

where the left side indicates the backscatter link frequency and the right side is the divide ratio as transmitted by the interrogator and the length of the of TRCal, the tag-to-interrogator calibration symbol, sent by the interrogator to the tag.

The backscatter link frequency is in the unit of hertz, Hz, the divide ratio is a dimensionless quantity and the length of TRCAL is in the unit of seconds, s.

According to the prior art, calculation of an RFID tag backscatter link frequency (BLF) requires the decoding of query T → R calibration symbol, TRCAL, and a divide ratio, DR, by a digital processing unit. Known circuit implementations measure the length of the TRCAL symbol and determine the BLF by calculation (e.g. by dividing and adjusting the measured TRCAL).

The known method, i.e. counting the length of the TRCAL symbol, followed by a division and adjustment operation to determine the backscatter link frequency has several downsides. An implementation for symbol length counters is required as well as a dedicated memory to store the resulting symbol length. Further the required divider and multiplication logic is complex, bits are discharged and adjustments to resolve rounding errors are necessary.

SUMMARY OF THE DISCLOSURE

There may be a need to provide an improved method for determining the backscatter link frequency, which can avoid the implementation for symbol length counters and dedicated memory to store the resulting symbol length, avoid complex divider and multiplication logic, avoid discharge of bits, and avoid the adjustments to resolve Rounding errors. This disclosure provides a method and an RFID tag utilizing dedicated counters, that are able to directly determine the BLF avoiding divisions, multiplications and adjustment algorithms.

According to an aspect of the present disclosure, it is described a method for determining a backscatter link frequency, BLF, value in a radio frequency identification, RFID, tag device. The method comprises continuously evaluating incoming waveforms to determine receiving of a query command, wherein the query command comprises a start of a T → R calibration, TRCAL, symbol, an end of the TRCAL symbol, and a divide ratio, DR, parameter. Upon determining the receiving of the start of the TRCAL symbol, a first and a second counter are initialized, wherein the counters are clock driven, and wherein the first counter is associated with a first divide ratio and the second counter is associated with a second divide ratio. Until determining the receiving of the end of the TRCAL symbol, the first counter is incremented every first incremental number of oscillator clock cycles, and the second counter is incremented every second incremental number of oscillator clock cycles. Upon determining the receiving of the DR parameter, the divide ratio is determined based on the DR parameter and, from the first and the second counter, the counter associated with the determined divide ratio is selected as applicable counter. The current counter value of the applicable counter is stored as BLF indicator value, wherein the BLF is 1/(BLF indicator value * oscillator clock cycle length).

According to a further aspect of the present disclosure, it is described a radio frequency identification, RFID, tag device. The RFID tag comprises connection means, an analog demodulator, a clock device, and a digital processing unit. The connection means is configured to connect the RFID tag device to an antenna. The analog demodulator is configured to continuously evaluate incoming waveforms. The clock device is configured to drive a first and a second counter. The first counter is associated with a first divide ratio and the second counter is associated with a second divide ratio. The digital processing unit is configured to determine, based on the evaluated waveforms, reception of a query command, wherein the query command comprises a start of a T → R calibration, TRCAL, symbol, an end of the TRCAL symbol, and a divide ratio, DR, parameter. The digital processing unit is further configured to initialize the first and the second counter upon determination of the reception of the start of the TRCAL symbol. The digital processing unit is further configured to increment the first counter every first incremental number of oscillator clock cycles and the second counter every second incremental number of oscillator clock cycles until determination of the reception of the end of the TRCAL symbol. The digital processing unit is further configured to determine a reception of a DR parameter. The digital processing unit is further configured to determine the divide ratio based on the DR parameter after reception of the query command, and select, from the first and the second counter, the counter associated with the determined divide ratio as applicable counter. The digital processing unit is further configured to store the current counter value of the applicable counter as BLF indicator value, wherein the BLF is 1/(BLF indicator value * oscillator clock cycle length).

By using the counters to count the cycles for two different divide ratios, both counter values - for two possible divide ratios - are available, when the DR parameter is transmitted near the end of the query command. Since the counters are increased on the basis of the clock cycles, the counter values are based on the TRCAL symbol length. The BLF indicator value can directly be used to generate the requested return link data rate; thus, no calculation is necessary and rounding errors are avoided.

In summary, this disclosure may enable the improvement of the determining of the backscatter link frequency in an RFID tag.

The aspects defined above, and further aspects of the disclosure are apparent from the examples of embodiment to be described hereinafter and are explained with reference to these examples of embodiment. The disclosure will be described in more detail hereinafter with reference to examples of embodiment but to which the disclosure is not limited.

EXEMPLARY EMBODIMENTS

According to an embodiment, the method may further comprise validating the received query command. In the RFID tag device, the digital processing unit may further be configured to validate the received query command. The validation of the query command can enhance communication security and avoid communication errors.

According to another embodiment, the first counter may be associated with a divide ratio of 8 and the first incremental number is 8, and/or the second counter may be associated with a divide ratio of 64/3 and the second incremental number is twice 21 and once 22 over a period of three incrementations. Other divide ratios and incremental numbers are possible, like 16 or 128/3. Divide ratios of 8 and 64/3 are most common, and the usage of these values provides the best compatibility.

According to another embodiment, the first and the second counters may be driven by a gated clock provided by a clock generator block, which is driven by an oscillator. In the RFID tag device, the clock device may comprise a clock generator block, which is driven by an oscillator, and the clock generator block may be configured to provide a gated clock which drives the first and the second counters. Thereby energy can be saved, since a gated clock is the most power efficient clock. However, alternatives for controlling the first and second counters can be used.

According to another embodiment, the first and/or second incremental number for the initial incrementing of the first and/or second counter is a predefined value. In the RFID tag device, the digital processing unit may further be configured to use a predefined value as the first and/or second incremental number for the initial incrementing of the first and/or second counter. The predefined value serves as offset for the initial count, whereby the accuracy of the resulting BLF indicator value can be increased.

According to another embodiment, the first and the second counters may be directly driven by a clock provided by an oscillator, and wherein control signals are used for initializing and incrementing the counters. In the RFID tag device, the clock device may comprise a clock provided by an oscillator, and the digital processing unit may further be configured to provide control signals to initialize and increment the counters. This option is easier to implement and integrate in existing RFID tags.

According to another embodiment, the method may further comprise generating a return link data rate based on the BLF indicator value and transmitting data using the return link data rate. The RFID tag device may further comprise an analog modulator and the digital processing unit may further be configured to generate a return link data rate based on the BLF indicator value and the analog modulator is configured to transmit data using the return link data rate. Since the BLF indicator value can directly be used to generate the requested return link data rate, the RFID tag can start transmitting data back to the interrogator without performing a calculation first, therefore less time and energy is consumed.

According to another aspect, the aforementioned features may also be implemented by a computer program product comprising instructions which, when the program is executed by a computing device, cause the computing device to implement any of the methods above.

Further the features as disclosed herein can also be implemented as a Hardware State Machine, a Finite State Machine, or a simulation.

BRIEF DESCRIPTION OF THE DRAWINGS

Figure 1    shows a schematic configuration of a BLF system of an RFID tag according to an exemplary embodiment of the disclosure;

Figure 2    shows a schematic circuit diagram according to an exemplary embodiment of the disclosure;

Figure 3    shows a flow chart illustrating a method according to an exemplary embodiment of the disclosure;

Figure 4    shows a schematic waveform diagram for a short TRCAL symbol according to an exemplary embodiment of the disclosure; and

Figure 5    shows a schematic waveform diagram for a long TRCAL symbol according to an exemplary embodiment of the disclosure.

DETAILED DESCRIPTION OF THE DRAWINGS

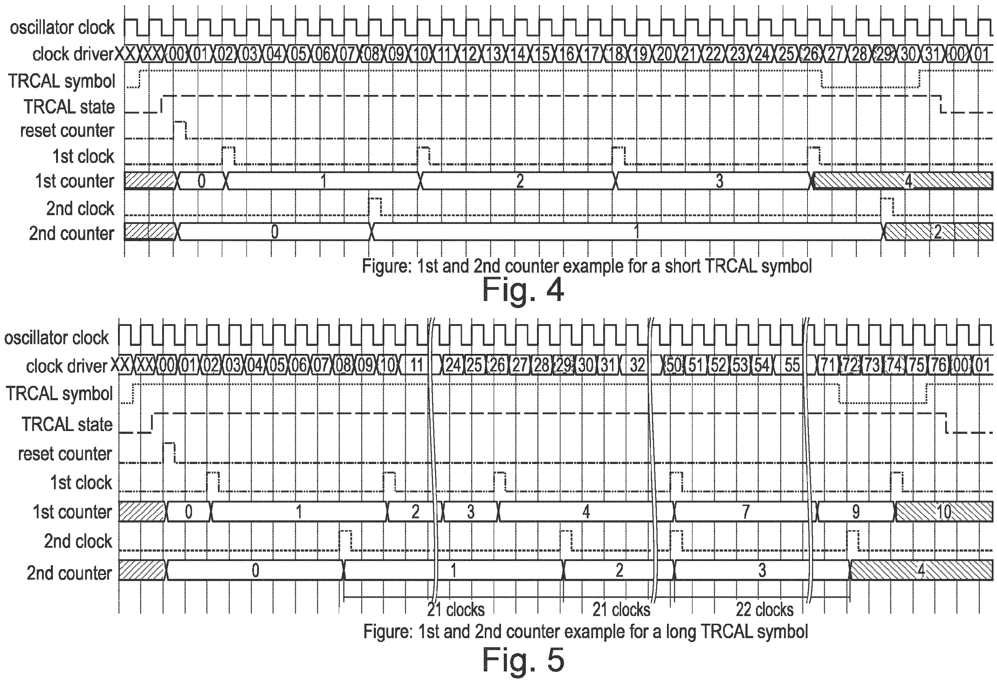

In the following the disclosed features will be described in context with the Figures, which may comprise usage of dedicated counters for divide ratios (e.g. for divide ratio DR=8 and in parallel for divide ratio DR=64/3). Increment of the first (e.g. for DR=8) counter is done periodically, (e.g. every 8th cycle of a clock). Increment of the second (e.g. for DR=64/3) counter is done periodically, too, (e.g. every 21st, 21st and 22nd cycle of the clock, as can be seen in Fig. 5). Both counters are incremented only during TRCAL, i.e. after the start of the TRCAL symbol was received, and before the end of the TRCAL symbol was received. That means that the incrementing of the counters stops at the end of the TRCAL symbol. At this point in time, the counter values represent the required BLF indicator value.

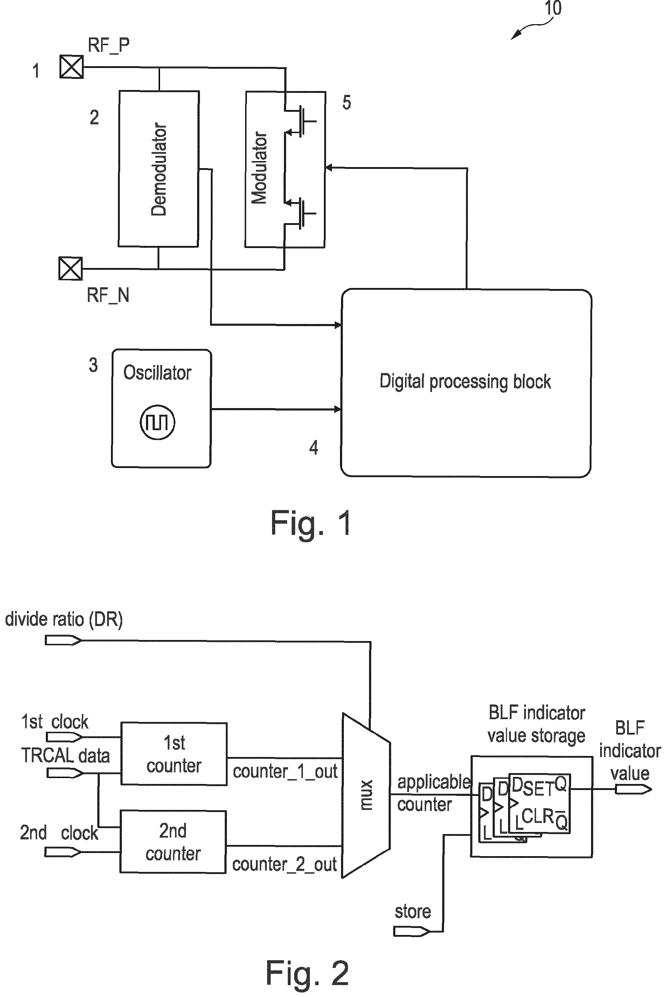

Figure 1 shows a schematic configuration of a BLF system of an RFID tag device 10. The BLF system comprises connection means 1, which may be RF input pins allowing a connection to an antenna. The BLF system further comprises an analog demodulator 2, a clock device 3, e.g. an oscillator, and a digital processing unit 4. The digital processing unit 4 has a clock divider and BLF counters. The BLF system may also comprise an analog modulator 5.

Not shown in the Figures are supply voltage rails of the circuit blocks, level shifters for signal level translation, other circuit blocks of the RFID tag IC, and the antenna.

Figure 2 shows a schematic circuit diagram according to an exemplary embodiment of the disclosure. In this embodiment, each counter is driven by a gated clock provided by clock generator block driven by an oscillator. The signals received from the clocks are noted as inputs to the counters, which are referred to as 1st counter and 2nd counter. Both counters also have a reset input, where a signal to reset the counter can be received.

Each counter can have an individual reset counter, or both counters can receive the reset input signal from the same reset input. For ease of depiction, the reset input or inputs are not shown in Figure 2. The counters could be DR8 and DR64/3 counters, but without loss of generality, as the divide ratios can be different, e.g. 16 and 128/3. The signals from the clock to the counters are referred to as 1st clock for the first counter, e.g. DR8, and 2nd clock for the second counter, e.g. DR64/3. A state TRCAL signal may gate the counter inputs, which ensures that the counters are only incremented during the reception of the TRCAL symbol. In addition to that, the gating conserves energy. Both counters are incremented in parallel, which means that the 1st counter is incremented every time the 1st clock provides an input signal, and the 2nd counter is incremented every time the 2nd clock provides an input signal. The 1st and 2nd clock provide input signals during state TRCAL, i.e. during the time, the BLF system is in the state of receiving the TRCAL symbol, in other words, after the start of the TRCAL symbol was received, and before the end of the TRCAL symbol was received by the BLF system. Both counters, i.e. their incrementing, stop once state TRCAL is finished, i.e. the end of the TRCAL symbol was received, and the counters keep their value. Since they are not incremented anymore after the end of the TRCAL symbol was received, they retain their last value. It is optionally possible to save the values in a memory element, which may be a long-term memory. It is also possible that each incrementation triggers a saving of the updated value. The clock signals can also be generated, sent, and received outside of a TRCAL symbol, but outside of a TRCAL symbol, the clock signals will not effect any incrementing of the counters.

After the TRCAL symbol was received, i.e. after the end of the TRCAL symbol was received, the remaining query command, which comprises the TRCAL symbol, is processed.

Optionally, the query command can be validated to ensure the correctness of the command.

After the query command is processed the counter values counter_1_out and counter_2_out, for the first and second counter, respectively, may be stored.

Since the query command also comprises the divide ratio, DR, parameter, the divide ratio is known therefrom. Since only one DR can be used, it is sufficient to store the counter value of the counter associated with the DR indicated by the DR parameter.

As an option, the phase of clock signals 1st clock and 2nd clock may be shifted to optimize counting accuracy, in other words, the counters have an offset of a predefined number of oscillator clock cycles, which improves the accuracy. This may be effected by using a predefined value, i.e. the offset, as the first and/or second incremental number for the initial counting step, i.e. incrementing of the first and/or second counter. This can e.g. be seen in Figures 4 and 5, where the TRCAL state is entered in the clock divider phase right before phase 00, the counters are initialized to the value zero, and the predefined number for the first incremental number is two while the predefined number for the second incremental number is eight. The incremental number for the subsequent incrementing cycles is then eight for the first counter, indicating a DR8, and twenty-one for the second counter, indicating a DR64/3.

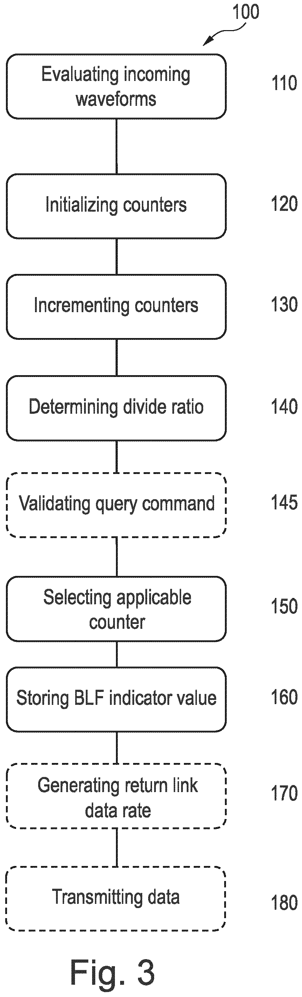

As an overview, an exemplary BLF determination sequence, which is shown in Figure 3 as method 100, may include the following features. This exemplary embodiment considers an interrogator or reader transmitting waveforms that encode a T → R calibration (TRCAL) symbol and a divide ratio (DR). RFID tag device 10 continuously evaluates the incoming waveforms, which is shown in Figure 3 with reference sign 110. The RFID tag device is configured to receive a query command from an interrogator. A query command comprises a start of a T → R calibration, TRCAL, symbol, an end of the TRCAL symbol, and a divide ratio, DR, parameter.

The RFID tag 10 receives the TRCAL symbol as a part of the preamble sequence, which is part of a query command. The digital processing unit 4 can determine that the TRCAL symbol is starting and may enter a distinctive state for reception of the TRCAL symbol.

The tag 10 has two counters, which are associated with two different divide ratios. During the evaluating 110, the RFID reader device determines that the start of the TRCAL symbol is received, and in response to this initializes the counters in step 120. The counters are incremented in correspondence to the clock cycles of the clock device in step 130 until the end of the TRCAL symbol is received as described in the following.

Both counters are initialized 120 at the start of the TRCAL state and are incremented 130 during TRCAL state periodically. The first counter is incremented after a first number of cycles and the second counter after a second number of cycles. As an example, if the first counter is associated with a divide ratio of 8, the first counter is incremented every 8th oscillator clock cycle. Likewise, if the second counter is associated with a divide ratio of 64/3, the second counter is incremented every 21st or 22nd oscillator clock cycle. Thereby over three incrementations the 21 cycles are used twice, and the 22 cycles are used once, so that after 3 incrementations, 64 oscillator clock cycles have passed. Any order can be used (21, 21, 22; 21, 22, 21; or 22, 21, 21).

The counters are associated with divide ratios, which also relate to the number of clock cycles that pass before the corresponding counter is incremented. As a first example, a divide ratio of 8 could be associated with the first counter, which may be called DR8 to indicate the associated divide ratio. The DR8 counter is incremented after every 8 oscillator clock cycles. This can be seen in Figures 4 and 5, where DR8 counter value is shown as 1st counter. 1st counter is initialized (after a short offset as detailed above) after the start of TRCAL is received, which is indicated that the TRCAL symbol signal changes from zero to one, i.e. the BLF system enters the state TRCAL in the following clock cycle, as indicated by the TRCAL state signal. After every 8 oscillator clock cycles, which are shown as oscillator clock, the value of the 1st counter is increased by one, until TRCAL symbol ends, which is shown in Fig. 4 for example, after clock cycle 30, where TRCAL symbol changes from zero to one again.

After the end of TRCAL symbol was received, state TRCAL is exited, which is indicated in Figures 4 and 5 by TRCAL state returning to zero, in clock cycle 31, the continuous evaluation of waveforms 110 continues, but the subsequent steps are independent of the evaluation cycle.

At the end of the TRCAL symbol the incrementations of the counters stop and the corresponding values of the counters may be stored separately. In Fig. 4 the 1st counter has the value 4 and the 2nd counter has the value 2 at the end of TRCAL state. In Fig. 5, where several jumps in the depiction are indicated by // signs, the values are 10 and 4, respectively. The reception of the query command is continued and, e.g. near the end of the query command, a divide ratio (DR) parameter is received. This DR parameter may also be stored separately. After the complete query command is received, it may optionally be validated in step 145 to enhance security.

The divide ratio is determined in step 140 from the DR parameter. As an example, a DR parameter of value zero may indicate that a divide ratio of 8 is to be used by the RFID tag and a DR parameter of value one may indicate that a divide ratio of 64/3 is to be used by the RFID tag.

It is noted that validation 145 and divide ration determination 140 can be performed at the same time or sequentially in any order. Since they are not dependent on each other, the order in Figure 3 is only one possibility, without loss of generality.

Based on the determined divide ratio, the applicable counter can be selected in step 150. If the DR parameter of the query command indicates the value zero, and the value zero indicates the divide ratio of 8, then the counter that is associated with the divide ratio 8 is applicable. The current value of the applicable counter is then stored in step 160 as the BLF indicator value.

The corresponding backscatter link frequency, BLF, that is to be used by the RFID tag 10, is thus indicated by the BLF indicator value and the concrete BLF can be determined by dividing 1 by the product of the BLF indicator value and the oscillator clock cycle length.

As an example, a typical oscillator clock cycle is about 700 ns long. A DR8 counter of 4 indicates that the TRCAL symbol was about four counts of 8 cycles, i.e. 4 * 8 * 700 ns = 22400ns long.

So, in other words, in order to generate a serial bit stream with the requested data link rate, the BLF indicator value is given to a counter clocked by the oscillator clock:

1/(BLF indicator value * oscillator clock cycle length) Using the above values as an example: 1/(4*700 ns) = 357.14 kHz

Oscillator clock cycles might range from 100ns to 1000ns. Typical TRCAL symbol lengths might vary between 17200 ns and 200000 ns for DR8 and. between 33200 ns and 225000 ns for DR=64/3. Correspondingly, BLF ranges between 465 kHz and 40 kHz for DR8, and between 640 kHz and 95 kHz for DR64/3.

Since at the end of receiving the query command, the divide ratio is known, only the applicable counter value is of interest. It can be stored as BLF indicator value in a memory for further usage.

Method 100 may proceed with step 170 of generating a return link data rate. A typical return link data rate may range from 40 to 640 kbit/s, which is derived from above values for the frequency, i.e. 40 kHz to 640 kHz. Since the return link data rate can be generated from the BLF indicator value alone, the actual calculation of the BLF, as described above, is not necessary.

While the frequences detailed above are in ranges, which are usually referred to as Low Frequency, LF (about 30 kHz to 300 kHz), or Medium Frequency, MF (about 300 to 3000 kHz), the frequencies for High Frequency, HF (about 3 to 30 MHz) or even other frequency ranges, which are applicable to RFID, tags are determined in the same manner, i.e. by incrementing a counter clocked with an oscillator clock until an BLF indicator value is reached.

The data link rate can then be determined based on the used encoding. Using, for example a bi-phase space encoding, also called FM0 encoding, a frequency of 40 kHz leads to a data link rate of 40 kbit/s. If other encoding types are used, for example Miller encoding schemes, the data link rate can be determined by using a divisor of e.g. 2, 4, or 8.

For transmission mode, the digital modulator 5 of the RFID tag 10 uses BLF indicator value to generate the requested return link data rate. This data rate can then be used in step 180 to transmit data to the interrogator. The data to be transmitted is digitally encoded and sent as modulated data to the analog modulator 5.

Figure 4 shows an example of the counters for a short TRCAL symbol. In the following the term "phase" or "cycle" is used to denote the individual phases of the signals depicted in Fig. 4. In the clock divider phase preceding the phase 00, the TRCAL symbol is received, indicated by the TRCAL symbol signal changing from zero to one, and the TRCAL state is entered, indicated by the TRCAL state signal changing from zero to one, and the 1st counter is initialized, indicated by its phase 0 and the reset counter signal. The 1st counter is incremented by an offset of two phases, indicated as 1st counter phase 0, before the 1st counter is incremented to value one at phase 02. The 1st counter is then incremented every eight clock divider phases, i.e. at phase 10, 18 and 26 to the values two, three and four, respectively. Since the TRCAL symbol ends after phase 30, indicated by the TRCAL symbol signal changing from zero to one, the TRCAL state is exited in phase 31, as indicated by the TRCAL state signal changing from one to zero in response to the TRCAL symbol changing from zero to one after phase 30, i.e. the rising edge of the TRCAL symbol. Consequently, the 1st counter is not incremented after phase 31, and its final value is four.

The 2nd counter is initialized in phase 00 and receives an offset of 8 cycles. It is then incremented to one and two at phases 08 and 29. Incrementing stops after TRCAL state has returned to zero in phase 31.

Figure 5 shows an example of the 1st and 2nd counter for a long TRCAL symbol. As can be seen, the TRCAL symbol signal has the value one from the phase preceding phase 00 until phase 71, TRCAL state has the value one from phase 00 to phase 76. The reset counter signal initializes the counters in phase 00, and the 1st counter is incremented with the offset of two a total of ten times at phases 02, 10, 18, 26, 34, 42, 50, 58, 66, and 74. Due to the breaks to shorten the depiction, only the incrementing on phases 02, 10, 26, and 74 are shown. Likewise, the 2nd counter is incremented four times after the offset of the value eight at phases 08, 29, 50, and 72.

The described subject-matter can be implemented as method, device, i.e. RFID tag, or BLF system. The described subject-matter can also be implemented in a hardware state machine or finite state machine. And the described subject-matter can also be implemented as a computer program product, comprising instructions which, when the program is executed by a computing device, cause the computing device to implement describes subject-matter.

REFERENCE SIGNS

| | |
|---|---|
| 1 | Connection means |
| 2 | Analog demodulator |
| 3 | Clock device |
| 4 | Digital processing unit |
| 5 | Analog modulator |
| 10 | RFID tag device |
| 100 | Method for determining a backscatter link frequency |
| 110 | Evaluating incoming waveforms |
| 120 | Initializing counters |
| 130 | Incrementing counters |
| 140 | Determining divide ratio |
| 145 | Validating query command |
| 150 | Selecting applicable counter |
| 160 | Storing BLF indicator value |
| 170 | Generating return link data rate |
| 180 | Transmitting data |

**Claims**

1. A method (100) for determining a backscatter link frequency, BLF, value in a radio frequency identification, RFID, tag device, the method (100) comprising:

continuously evaluating (110) incoming waveforms to determine receiving of a query command, wherein the query command comprises a start of a T → R calibration, TRCAL, symbol, an end of the TRCAL symbol, and a divide ratio, DR, parameter;

upon determining the receiving of the start of the TRCAL symbol, initializing (120) a first and a second counter, wherein the counters are clock driven, and wherein the first counter is associated with a first divide ratio and the second counter is associated with a second divide ratio;

until determining the receiving of the end of the TRCAL symbol, incrementing (130) the first counter every first incremental number of oscillator clock cycles and the second counter every second incremental number of oscillator clock cycles;

upon determining the receiving of the DR parameter, determining (140) the divide ratio based on the DR parameter and selecting (150), from the first and the second counter, the counter associated with the determined divide ratio as applicable counter; and

storing (160) the current counter value of the applicable counter as BLF indicator value;

wherein the BLF is 1/(BLF indicator value * oscillator clock cycle length).

2. The method (100) of claim 1, further comprising validating (145) the received query command.

3. The method (100) of any one of claims 1 and 2, wherein the first counter is associated with a divide ratio of 8 and the first incremental number is 8.

4. The method (100) of any one of claims 1 to 3, wherein the second counter is associated with a divide ratio of 64/3 and the second incremental number is twice 21 and once 22 over a period of three incrementations.

5. The method (100) of any one of claims 1 to 4, wherein the first and the second counters are driven by a gated clock provided by a clock generator block, which is driven by an oscillator.

6. The method (100) of any one of claims 1 to 5, wherein at least one of the following group applies, the group consisting of:

the first incremental number for the initial incrementing (130) of the first counter is a predefined value; and

the second incremental number for the initial incrementing (130) of the second counter is a predefined value.

7. The method (100) of any one of claims 1 to 4, wherein the first and the second counters are directly driven by a clock provided by an oscillator, and wherein control signals are used for initializing (120) and incrementing (130) the counters.

8. The method (100) of any one of claims 1 to 7, further comprising generating (170) a return link data rate based on the BLF indicator value and transmitting (180) data using the return link data rate.

9. A radio frequency identification, RFID, tag device (10), comprising:

connection means (1) configured to connect the RFID tag device to an antenna;

an analog demodulator (2), configured to continuously evaluate incoming waveforms;

a clock device (3), configured to drive a first and a second counter, wherein the first counter is associated with a first divide ratio and the second counter is associated with a second divide ratio; and

a digital processing unit (4), configured to

determine, based on the evaluated waveforms, reception of a query command, wherein the query command comprises a start of a T → R calibration, TRCAL, symbol, an end of the TRCAL symbol, and a divide ratio, DR, parameter

initialize the first and the second counter upon determination of the reception of the start of the TRCAL symbol;

increment the first counter every first incremental number of oscillator clock cycles and the second counter every second incremental number of oscillator clock cycles until determination of the reception of the end of the TRCAL symbol;

determine a reception of a DR parameter, determine the divide ratio based on the DR parameter after reception of the query command, and select, from the first and the second counter, the counter associated with the determined divide ratio as applicable counter; and

store the current counter value of the applicable counter as BLF indicator value;

wherein the BLF is 1/(BLF indicator value * oscillator clock cycle length).

10. The RFID tag device (10) of claim 9, wherein the digital processing unit (4) is further configured to validate the received query command.

11. The RFID tag device (10) of any one of claims 9 and 10, wherein at least one applies of the group consisting of

the first counter is associated with a divide ratio of 8 and the first incremental number is 8; and the second counter is associated with a divide ratio of 64/3 and the second incremental number is twice 21 and once 22 over a period of three incrementations.

12. The RFID tag device (10) of any one of claims 9 to 11, wherein the clock device (3) comprises at least one of the group consisting of

a clock generator block, which is driven by an oscillator, and wherein the clock generator block is configured to provide a gated clock which drives the first and the second counters; and a clock provided by an oscillator, and wherein the digital processing unit (4) is further configured to provide control signals to initialize and increment the counters.

13. The RFID tag device (10) of any one of claims 9 to 12, wherein the digital processing unit (4) is configured to at least one of the following group consisting of:

use a predefined value as the first incremental number for the initial incrementing of the first counter; and use a predefined value as the second incremental number for the initial incrementing of the second counter.

14. The RFID tag device (10) of any one of claims 9 to 13, further comprising an analog modulator (5), wherein the digital processing unit (4) is further configured to generate a return link data rate based on the BLF indicator value and wherein the analog modulator (5) is configured to transmit data using the return link data rate.

15. A computer program product comprising instructions which, when the program is executed by a computing device, cause the computing device to implement the method (100) of any one of claims 1 to 8.

**Amended claims in accordance with Rule 137(2) EPC.**

1. A method (100) for determining a backscatter link frequency, BLF, value in a radio frequency identification, RFID, tag device, the method (100) comprising:

by an analog demodulator of the RFID tag device: continuously evaluating (110) waveforms, incoming from an RFID interrogator, to determine receiving of a query command, wherein the query command comprises a start of a T → R calibration, TRCAL, symbol, an end of the TRCAL symbol, and a divide ratio, DR, parameter; and

by a digital processing unit of the RFID tag device:

upon determining the receiving of the start of the TRCAL symbol, initializing (120) a first and a second counter, wherein the counters are clock driven, and wherein the first counter is associated with a first divide ratio and the second counter is associated with a second divide ratio; until determining the receiving of the end of the TRCAL symbol, incrementing (130) the first counter every first incremental number of oscillator clock cycles of an oscillator of the RFID tag device and the second counter every second incremental number of oscillator clock cycles of the oscillator of the RFID tag device; upon determining the receiving of the DR parameter, determining (140) the divide ratio based on the DR parameter; if the determined divide ratio is the first divide ratio, selecting (150) the first counter as applicable counter, if the determined divide ratio is the second divide ratio, selecting (150) the second counter as applicable counter; and storing (160) the current counter value of the applicable counter as BLF indicator value; wherein the BLF is determined by 1/(BLF indicator value * oscillator clock cycle length).

2. The method (100) of claim 1, further comprising validating (145), by the digital processing unit, the received query command.

3. The method (100) of any one of claims 1 and 2, wherein the first counter is associated with a divide ratio of 8 and the first incremental number is 8.

4. The method (100) of any one of claims 1 to 3, wherein the second counter is associated with a divide ratio of 64/3 and the second incremental number is twice 21 and once 22 over a period of three incrementations.

5. The method (100) of any one of claims 1 to 4, wherein the first and the second counters are driven by a gated clock provided by a clock generator block, which is driven by the oscillator.

6. The method (100) of any one of claims 1 to 5, wherein at least one of the following group applies, the group consisting of:

the first incremental number for the initial incrementing (130) of the first counter is a predefined value; and

the second incremental number for the initial incrementing (130) of the second counter is a predefined value.

7. The method (100) of any one of claims 1 to 4, wherein the first and the second counters are directly driven by a clock provided by the oscillator, and wherein control signals are used for initializing (120) and incrementing (130) the counters.

8. The method (100) of any one of claims 1 to 7, further comprising generating (170), by the digital processing unit, a return link data rate based on the BLF indicator value and transmitting (180) data using the return link data rate.

9. A radio frequency identification, RFID, tag device (10), comprising:

connection means (1) configured to connect the RFID tag device to an antenna;
an analog demodulator (2), configured to continuously evaluate waveforms incoming from an RFID interrogator;
a clock device (3), configured to drive a first and a second counter, wherein the first counter is associated with a first divide ratio and the second counter is associated with a second divide ratio; and
a digital processing unit (4), configured to

determine, based on the evaluated waveforms, reception of a query command, wherein the query command comprises a start of a T $\rightarrow$ R calibration, TRCAL, symbol, an end of the TRCAL symbol, and a divide ratio, DR, parameter
initialize the first and the second counter upon determination of the reception of the start of the TRCAL symbol;
increment the first counter every first incremental number of oscillator clock cycles of an oscillator of the RFID tag device and the second counter every second incremental number of oscillator clock cycles of the oscillator of the RFID tag device until determination of the reception of the end of the TRCAL symbol;
determine a reception of a DR parameter, determine the divide ratio based on the DR parameter after reception of the query command;
select the first counter as applicable counter, if the determined divide ratio is the first divide ratio;
select the second counter as applicable counter, if the determined divide ratio is the second divide ratio; and
store the current counter value of the applicable counter as BLF indicator value;
wherein the BLF is determined by 1/(BLF indicator value * oscillator clock cycle length).

10. The RFID tag device (10) of claim 9, wherein the digital processing unit (4) is further configured to validate the received query command.

11. The RFID tag device (10) of any one of claims 9 and 10, wherein at least one applies of the group consisting of

the first counter is associated with a divide ratio of 8 and the first incremental number is 8; and
the second counter is associated with a divide ratio of 64/3 and the second incremental number is twice 21 and once 22 over a period of three incrementations.

12. The RFID tag device (10) of any one of claims 9 to 11, wherein the clock device (3) comprises at least one of the group consisting of

a clock generator block, which is driven by the oscillator, and wherein the clock generator block is configured to provide a gated clock which drives the first and the second counters; and
a clock provided by the oscillator, and wherein the digital processing unit (4) is further configured to provide control signals to initialize and increment the counters.

13. The RFID tag device (10) of any one of claims 9 to 12, wherein the digital processing unit (4) is configured to at least one of the following group consisting of:

use a predefined value as the first incremental number for the initial incrementing of the first counter; and
use a predefined value as the second incremental number for the initial incrementing of the second counter.

14. The RFID tag device (10) of any one of claims 9 to 13, further comprising an analog modulator (5), wherein the digital processing unit (4) is further configured to generate a return link data rate based on the BLF indicator value and wherein the analog modulator (5) is configured to transmit data using the return link data rate.

15. A computer program product comprising instructions which, when the program is executed by the RFID of any one of claims 9 to 14, cause the RFID tag to

**EP 4 787 224 A1**

implement the method (100) of any one of claims 1 to 8.

10

RF_P

1

2

Demodulator

Modulator

5

RF_N

3 Oscillator

Digital processing block

4

## Fig. 1

divide ratio (DR)

1st clock

TRCAL data

1st counter

counter_1_out

mux

applicable counter

BLF indicator value storage

BLF indicator value

D D DSETQ

CLRQ

2nd clock

2nd counter

counter_2_out

store

## Fig. 2

100

| Evaluating incoming waveforms | 110 |

| Initializing counters | 120 |

| Incrementing counters | 130 |

| Determining divide ratio | 140 |

| Validating query command | 145 |

| Selecting applicable counter | 150 |

| Storing BLF indicator value | 160 |

| Generating return link data rate | 170 |

| Transmitting data | 180 |

# Fig. 3

Figure: 1st and 2nd counter example for a short TRCAL symbol

Fig. 4

Figure: 1st and 2nd counter example for a long TRCAL symbol

Fig. 5

Europäisches
Patentamt
European
Patent Office
Office européen
des brevets

# EUROPEAN SEARCH REPORT

**Application Number**

EP 25 15 4770

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/301516 A1 (MAREK TOMAS [CZ] ET AL) 13 October 2016 (2016-10-13) * abstract * * paragraphs [0004] - [0007], [0022] - [0035] * * figures 1-4 * | 1-15 | INV. G06K7/10 G06K19/07 |
| A | US 2007/221737 A2 (IMPINJ INC [US]) 27 September 2007 (2007-09-27) * abstract * * paragraphs [0065] - [0086], [0102] - [0107] * * figures 7-21 * | 1-15 | |
| A | CN 101 655 922 A (UNIV XIDIAN) 24 February 2010 (2010-02-24) * abstract * * page 1 - page 8 * | 1-15 | |
| A | FEI WANG ET AL: "Discussion on downlink and uplink channel/signal aspects", 3GPP DRAFT; R1-2405991; TYPE DISCUSSION; FS_AMBIENT_IOT_SOLUTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG1, no. Maastricht, NL; 20240819 - 20240823 9 August 2024 (2024-08-09), XP052637223, Retrieved from the Internet: URL:https://www.3gpp.org/ftp/TSG_RAN/WG1_RL1/TSGR1_118/Docs/R1-2405991.zip R1-2405991.docx [retrieved on 2024-08-09] * abstract * * page 2 * | 1-15 | TECHNICAL FIELDS SEARCHED (IPC) G06K |

The present search report has been drawn up for all claims

| Place of search | Date of completion of the search | Examiner |
|---|---|---|
| Munich | 1 July 2025 | Castagnola, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 15 4770

This annex lists the patent family members relating to the patent documents cited in  the above-mentioned European search report.
The members are as contained in the European Patent Office EDP file on
The European Patent Office is in no way liable for these particulars which are merely given for the purpose of information.

01-07-2025

| Patent document cited in search report | Publication date | Patent family member(s) | Publication date |
|---|---|---|---|
| US 2016301516 A1 | 13-10-2016 | EP 3079319 A1 | 12-10-2016 |
| | | US 2016301516 A1 | 13-10-2016 |
| US 2007221737 A2 | 27-09-2007 | US 2006163370 A1 | 27-07-2006 |
| | | WO 2006078882 A2 | 27-07-2006 |
| CN 101655922 A | 24-02-2010 | NONE | |

EPO FORM P0459

For more details about this annex : see Official Journal of the European Patent Office, No. 12/82